# EUROPÄISCHE PATENTSCHRIFT

(11) **EP 2 544 839 B1**
(45) Veröffentlichungstag und Bekanntmachung des Hinweises auf die Patenterteilung: **14.01.2015**
(21) Anmeldenummer: 11708796.5
(22) Anmeldetag: 10.03.2011
(51) Int. Cl.: B22D 11/108, B22D 11/16

(54) **VERFAHREN UND ANLAGE ZUM AUFBRINGEN EINES PULVERFÖRMIGEN STOFFS AUF EINEN BADSPIEGEL EINER METALLISCHEN SCHMELZE IN EINEM METALLURGISCHEN GEFÄSS**
PROCESS AND PLANT FOR APPLYING A PULVERULENT MATERIAL TO A SURFACE OF A METALLIC MELT IN A METALLURGICAL VESSEL
PROCÉDÉ ET SYSTÈME SERVANT À DÉPOSER UNE MATIÈRE PULVÉRULENTE SUR UNE SURFACE D'UN BAIN DE MÉTAL EN FUSION DANS UNE CUVE MÉTALLURGIQUE

(30) Priorität: 12.03.2010 AT 4102010
(43) Veröffentlichungstag der Anmeldung: 16.01.2013
(73) Patentinhaber: Siemens VAI Metals Technologies GmbH, 4031 Linz (AT)
(72) Erfinder: EBNER, Helmut, A-4331 Naarn i.M. (AT); SCHEIDEGGER, Roger, A-4300 St.Valentin (AT); HIRSCHMANNER, Martin, A-4060 Leonding (AT)
(74) Vertreter: Maier, Daniel Oliver
(86) Internationale Anmeldenummer: PCT/EP2011/053584
(87) Internationale Veröffentlichungsnummer: WO 2011/110615

(56) Entgegenhaltungen:
- CH-A5- 595 161
- CH-A5- 623 758
- DE-A1- 19 907 619
- DE-A1-102009 051 145
- JP-A- 62 212 044
- Andreas Jungbauer, Johann Penn und Franz Wimmer: "Arbeitssicherheit durchRobotertechnik" In: "S&I-Kompendium 2007", 2007, Verlag publish industry, München, XP002637107, Seiten 94-97, das ganze Dokument

## Beschreibung

### Gebiet der Technik

Die vorliegende Erfindung betrifft ein Verfahren und eine Anlage zum Aufbringen eines pulverförmigen Stoffs auf einen Badspiegel einer metallischen Schmelze in einem metallurgischen Gefäß, sowie die Verwendung der Anlage in einer Stranggießanlage zur Herstellung von Gießprodukten aus Stahl.

### Stand der Technik

Aus dem Stand der Technik ist es bekannt, während des Stranggießens einen pulverförmigen Stoff, beispielsweise ein Gießpulver, ein Schlackebildner oder ein Abdeckpulver, auf einen Badspiegel einer metallischen Schmelze in einem metallurgischen Gefäß, beispielsweise einer Kokille oder einem Gießverteiler, aufzugeben. Dabei erfüllt der aufgegebene pulverförmige Stoff unterschiedliche Aufgaben, beispielsweise wird im Falle des Schlackebildners die chem. Zusammensetzung der Schmelze verbessert bzw. die Oxidation der Schmelze verhindert oder zumindest reduziert, im Falle des Abdeckpulvers wird die Schmelze in vertikaler Richtung nach oben thermisch isoliert, oder im Falle des Gießpulvers wird das Anhaften des sich ausbildenden Gießstrangs an die Kokille verhindern. Damit diese Funktionen, z.B. beim Stranggießen in einer Stranggießanlage, zuverlässig erfüllt werden, ist es notwendig, eine ausreichende Menge an einem oder mehreren pulverförmigen Stoffen auf einen oder mehrere Badspiegel aufzugeben. Das auf einen Gießverteiler aufgegebene Pulver wird häufig auch als sogenanntes *Verteilerpulver* bezeichnet.

Aus den Schriften CH 595161 A und CH 623758 A ist je eine Vorrichtung mit einem Gießpulverbehälter und einer Dosiereinrichtung bekannt, wobei das Gießpulver dosiert auf den Badspiegel in einer Kokille aufgebracht wird.

Aus der Schrift JP 62212044 A2 ist es bekannt, ein Gießpulver und ein Inertgas mittels einer Lanze auf einen Gießverteiler aufzubringen, wobei das Gießpulver beim Aufbringen von einem Inertgasmantel eingehüllt wird.

Aus der Schrift DE 199 07 619 A1 ist das Dosieren eines pulverförmigen Stoffs durch eine gravimetrische Dosiervorrichtung bekannt. Dabei nimmt ein Roboter eine Menge des pulverförmigen Stoffs durch das Einstechen einer Schaufel in einen Schüttkegel des pulverförmigen Stoffs auf. Das Dosieren erfolgt gravimetrisch, wobei das überschüssige Pulver durch Abkippen oder Vibrieren der Schaufel entfernt wird. Obwohl in der Schrift ein System beschrieben wird, das prinzipiell auch zum Aufbringen eines pulverförmigen Stoffs auf einen Badspiegel einer metallischen Schmelze in einem metallurgischen Gefäß geeignet wäre, offenbart die Schrift kein Verfahren zum Aufbringen eines pulverförmigen Stoffs auf einen Badspiegel einer metallischen Schmelze in einem metallurgischen Gefäß.

Schließlich ist aus der Veröffentlichung A. Jungbauer et al. "Arbeitssicherheit durch Robotertechnik - Verbesserter Schutz an Stranggießanlagen", S&I Kompendium 2007, S. 94-97, Verlag publish industry, München, April 2007 ein System zum Aufbringen eines pulverförmigen Stoffs (Abeckpulver) auf einen Badspiegel einer metallischen Schmelze in einem metallurgischen Gefäß (Verteiler) bekannt. Das Abdeckpulver wird in einem Bunker oberhalb des Gießspiegels gelagert, sodass der pulverförmige Stoff den Bunker in Form eines Schüttkegels verlassen kann. Ein mit einer Schaufel verbundener Industrieroboter ist zum Einstechen, Dosieren, Transportieren und Entleeren des pulverförmigen Stoffs geeignet, wobei die Schaufel zumindest teilweise nach vorne ausgeführt ist. Gemäß der Schrift wird die Pulvermenge mittels einer Wiegeeinrichtung gemessen, wobei diese Information in das Qualitätssystem der Stranggießanlage einfließt.

Nachteilig an den Anlagen bzw. Verfahren nach dem Stand der Technik ist, dass durch die Verwendung von Dosier- bzw. Wiegeeinrichtungen die Zuverlässigkeit der Pulveraufgabe reduziert sowie die Staubentwicklung bei der Dosierung und der Herstellpreis der Anlage erhöht wird.

### Zusammenfassung der Erfindung

Aufgabe der Erfindung ist es, ein Verfahren und eine Anlage der eingangs genannten Art zu schaffen, die gegenüber dem bekannten Stand der Technik deutlich einfacher, weniger störungsanfällig und kostengünstiger dargestellt werden kann. Eine weitere Aufgabe der Erfindung ist es, die Staubentwicklung bei der Dosierung eines pulverförmigen Stoffs zu reduzieren.

Diese Aufgaben werden durch ein Verfahren nach Anspruch 1 gelöst.

Dabei sticht eine Schaufel, beispielsweise in horizontaler Richtung oder in einer schiefen Richtung, die beispielsweise eine horizontale und eine vertikal nach oben gerichtete Komponente aufweist, in einen Schüttkegel des pulverförmigen Stoffs ein, sodass die Schaufel eine Menge des pulverförmigen Stoffs, beispielsweise wenigstens ein Stoff aus der Gruppe Schlackebildner, Abdeckpulver, Gießpulver, aufnimmt, wobei der pulverförmige Stoff entweder in unverdichteter Form (z.B. als ein staubförmiges Pulver oder ein Granulat) oder auch in verdichteter Form (z.B. in pelletierter Form) vorliegt. Anschließend wird beim Dosieren ein dosierter, d.h. vorbestimmter, Anteil des sich auf der Schaufel befindenden pulverförmigen Stoffs von der Schaufel entfernt, sodass im nachfolgenden Arbeitsschritt eine vorbestimmte Menge des pulverförmigen Stoffs zum metallurgischen Gefäß, beispielsweise zu einem Gießverteiler (engl. *tundish*) oder zu einer Kokille einer Stranggießanlage, transportiert wird. Anschließend wird die Schaufel oberhalb des metallurgischen Gefäßes entleert, sodass der pulverförmige Stoff auf den Badspiegel der Schmelze aufgegeben wird. Dieser Vorgang wird im Allgemeinen je nach dem Pulverbedarf des Stranggießprozesses zyklisch wiederholt, sodass auf den Badspiegel eine vorbestimmte Menge eines oder mehrerer pulverförmiger Stoffe aufgegeben wird.

Dabei bewegt sich die Schaufel beim Dosieren relativ gegenüber einer Abstreifkante, sodass dosiert eine vorbestimmte Menge des pulverförmigen Stoffs von der Schaufel abgestreift wird. Dadurch ist es auf einfache Weise und unter geringer Staubentwicklung möglich, dosiert einen Anteil des pulverförmigen Stoffs von der Schaufel zu entfernen.

Nach einer Ausführungsform erfolgt das Dosieren geregelt. Beim geregelten Dosieren des pulverförmigen Stoffs sind besonders hohe Genauigkeiten erzielbar; natürlich ist aber auch ein gesteuertes Dosieren möglich.

Nach einer Ausführungsform verwendet die Regelung als Sollgröße eine Position, vorzugsweise einen Abstand in vertikaler Richtung zwischen der Schaufel und der Abstreifkante, oder ein Gewicht, vorzugsweise das Gewicht der zumindest teilweise befüllten Schaufel. Die Verwendung der Position ist vorteilhaft, da die der Positionsmessung zugeordneten Sensoren besonders robust und wenig störungsanfällig sind. Bei der Verwendung des Gewichts als Sollgröße wird die Menge des pulverförmigen Stoffs unmittelbar geregelt eingestellt.

Nach einer besonders einfachen Ausführungsform führt die Schaufel eine Relativbewegung in horizontaler Richtung gegenüber einer stillstehenden Abstreifkante aus.

Nach einer günstigen Ausführungsform wird die zumindest teilweise befüllte Schaufel nach dem Hineinstechen aus dem Schüttkegel des pulverförmigen Stoffs entfernt.
Es ist ebenfalls möglich, das Einstechen und das Entnehmen mittels einer, voneinander ununterbrochenen, Bewegung durchzuführen, beispielsweise durch eine Bewegung die eine horizontale und eine vertikal nach oben gerichtete Komponente aufweist. Eine derartige Tätigkeit ist dem Fachmann unter "Herausschaufeln" bekannt.

Nach einer Ausführungsform umfasst das Transportieren eine Schwenkbewegung vom Schüttkegel zum metallurgischen Gefäß, wodurch eine besonders hohe Aufgabeleistung des pulverförmigen Stoffs auf den Badspiegel erreicht wird.

Nach einer vorteilhaften Ausführungsform wird vor dem Entleeren die Bedeckung des Badspiegels mit dem pulverförmigen Stoff ermittelt und die Schaufel vorzugsweise oberhalb von unbedeckten oder wenig bedeckten Positionen entleert. Dadurch kann auf einfache Weise eine gleichmäßige Bedeckung des Badspiegels mit dem pulverförmigen Stoff sichergestellt werden.

Sämtliche Verfahrensschritte nach einem der Ansprüche 1 bis 7 werden von einem Roboter, beispielsweise einem Industrieroboter, durchgeführt. Industrieroboter sind in unterschiedlichen Konfigurationen erhältlich, wenig empfindlich und ermöglichen es, das Gefahrenpotenzial auf der Gießbühne während des Gießbetriebs zu reduzieren.

Eine Anlage zur Durchführung des Verfahrens beschreibt Anspruch 8.

Diese Anlagenkonfiguration zeichnet sich durch eine geringe Anzahl von Einzelkomponenten und eine hohe Flexibilität aus. Dabei wird der pulverförmige Stoff im Bunker in vertikaler Richtung erhöht gegenüber einer Gießbühne gelagert, sodass der pulverförmige Stoff den Bunker in Form eines Schüttkegels verlässt. Durch die erhöhte Lagerung wird das selbsttätige Nachrieseln des pulverförmigen Stoffs nach dem Herausschaufeln sichergestellt. Ein mit einer Schaufel verbundener Roboter wird zum Einstechen, gegebenenfalls Entnehmen, Dosieren, Transportieren und Entleeren des pulverförmigen Stoffs eingesetzt. Diesbezüglich wird unter dem Begriff "Roboter" ein Manipulator (beispielsweise ein Mehrachsen Industrieroboter) verstanden, der geeignet ist, das Einstechen, Dosieren, Transportieren und Entleeren des pulverförmige Stoffs zu bewerkstelligen. Bei der Dosierung des sich auf der Schaufel befindenden pulverförmigen Stoffs wird eine Abstreifkante verwendet, wobei mittels einer Relativbewegung zwischen der Schaufel und der Abstreifkante ein Anteil des pulverförmigen Stoffs von der Schaufel entfernt, beispielsweise abgestreift, wird.

Die Schaufel ist zumindest teilweise nach vorne und zumindest teilweise nach oben offen ausgeführt.

Für hohe Aufgabeleistungen ist es vorteilhaft, wenn sich der Schüttkegel und das metallurgische Gefäß innerhalb des minimalen und maximalen Arbeitsbereichs des Roboters befinden. Diesbezüglich wird unter dem Begriff "innerhalb des minimalen und maximalen Arbeitsbereichs" der von der Schaufel erreichbare Arbeitsbereich verstanden, ohne den Roboter mittels einer externen Verfahr- oder Verschwenkeinrichtung (z.B. ein dem Roboter zugeordnetes Fahrwerk oder eine dem Roboter zugeordnete Schwenkkonsole) zu bewegen.

Nach einer zweckmäßigen Ausführungsform weist wenigstens eine Roboterachse eine Messeinrichtung, beispielsweise eine Positions- oder Winkelmesseinrichtung, zur Bestimmung der Ist-Position der Schaufel, oder eine Messeinrichtung, beispielsweise eine Kraft- oder Momentenmesseinrichtung, zur Bestimmung des Gewichts der zumindest teilweise befüllten Schaufel, auf, wobei diese Roboterachse mit einer Steuerungs- oder Regelungseinrichtung verbunden ist. Dadurch wird ein einfaches und effektives Dosieren des sich auf der Schaufel befindenden pulverförmigen Stoffs mittels des Roboters ermöglicht.

Es hat sich als vorteilhaft herausgestellt, die Anlage nach einem der der Ansprüche 8 bis 10 in einer Stranggießanlage zur Herstellung von Gießprodukten aus Stahl zu verwenden.

### Kurze Beschreibung der Zeichnungen

Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die Folgendes zeigen:
Fig. 1 bis 4 ein Layout einer Gießbühne mit einem Pulverbunker, einem Roboter und zwei Gießverteilern
Fig. 5 eine perspektivische Darstellung eines Pulverbunkers für zwei pulverförmige Stoffe mit je einer Abstreifkante
Fig. 6 eine Vorderansicht eines Pulverbunkers für zwei pulverförmige Stoffe mit je einer Abstreifkante
Fig. 7 eine Darstellung eines 6 Achsen Industrieroboters mit einer Schaufel
Fig. 8 und 9 schematische Darstellungen der Arbeitsschritte beim Einstechen und Dosieren eines pulverförmigen Stoffs

### Beschreibung der Ausführungsformen

### Fig. 1

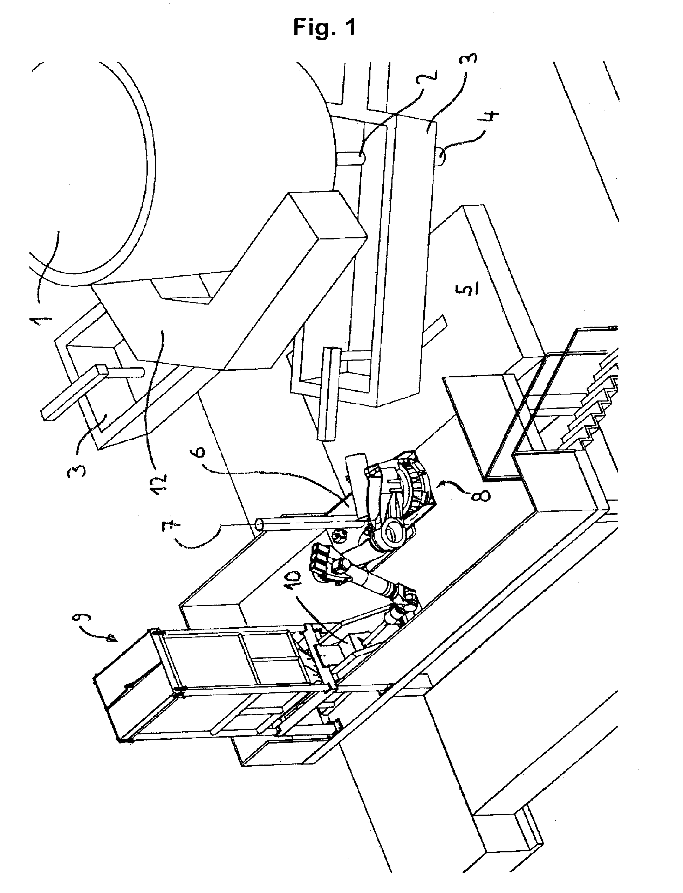

In Fig. 1 ist eine perspektivische Darstellung einer Stranggießanlage mit einer Gießbühne 5 gezeigt. Die Stahlschmelze wird in einer Pfanne 1 mit einer so genannten Fähre vom Schmelzaggregat über den Gießkran zur Stranggießanlage transportiert und in einen Pfannendrehturm 12 eingesetzt. Über einen Bodenablass (Ausguss), der durch einen Schieber verschlossen wird, fließt die Schmelze aus der Pfanne 1 in den Gießverteiler 3, wobei der flüssige Stahl in einem Schattenrohr 2 geführt wird. Vom Gießverteiler 3 strömt der flüssige Stahl durch ein Gießrohr (engl. *submerged entry nozzle,* kurz SEN) in eine nicht dargestellte Kokille. Auf der Gießbühne 5 ist ein als 6-Achsen Industrieroboter ausgebildeter Roboter 8 angeordnet, der auf einer schwenkbaren Schwenkkonsole 6 positioniert ist. Der Roboter 8 entnimmt einen als Verteilerpulver ausgebildeten pulverförmigen Stoff aus einem Pulverbunker 9 und führte ihn dem Badspiegel der Stahlschmelze im Verteiler 3 zu, sodass der Badspiegel gleichmäßig mit Verteilerpulver bedeckt ist. Damit zum einen größere Distanzen zwischen dem Pulverbunker 9 und dem Verteiler 3 überbrückt werden können und zum anderen der Roboter 8 im Falle einer Betriebsstörung einfach und rasch aus dem Arbeitsbereich auf der Gießbühne 5 gebracht werden kann, ist der Roboter 8 auf einer Schwenkkonsole 6 angeordnet, die um eine vertikale Drehachse 7 schwenkbar ausgebildet ist. Die Aufgabe von Verteilerpulver auf den Badspiegel im Verteiler 3 umfasst folgende Verfahrensschritte: Zuerst wird die Schaufel 10 in einen in Figur 1 nicht dargestellten Schüttkegel eingestochen, sodass die Schaufel 10 eine Menge des Verteilerpulvers aufnimmt. Anschließend wird die so zumindest teilweise befüllten Schaufel 10 aus dem Schüttkegel entnommen und die Menge des sich auf der Schaufel 10 befindenden Verteilerpulvers dosiert, wobei ein Anteil des Verteilerpulvers von der Schaufel 10 entfernt wird. Die Schaufel 10 selbst sowie das darin enthaltene Verteilerpulver werden anschließend zum Verteiler 3 transportiert, wobei der Roboter 8 eine Schwenkbewegung ausführt. Schließlich wird die Schaufel 10 oberhalb des Verteilers entleert und der Roboter 8 einschließlich der Schaufel 10 zurückgeschwenkt, sodass die Schaufel 10 erneut mit Verteilerpulver befüllt werden kann.

### Fig. 2

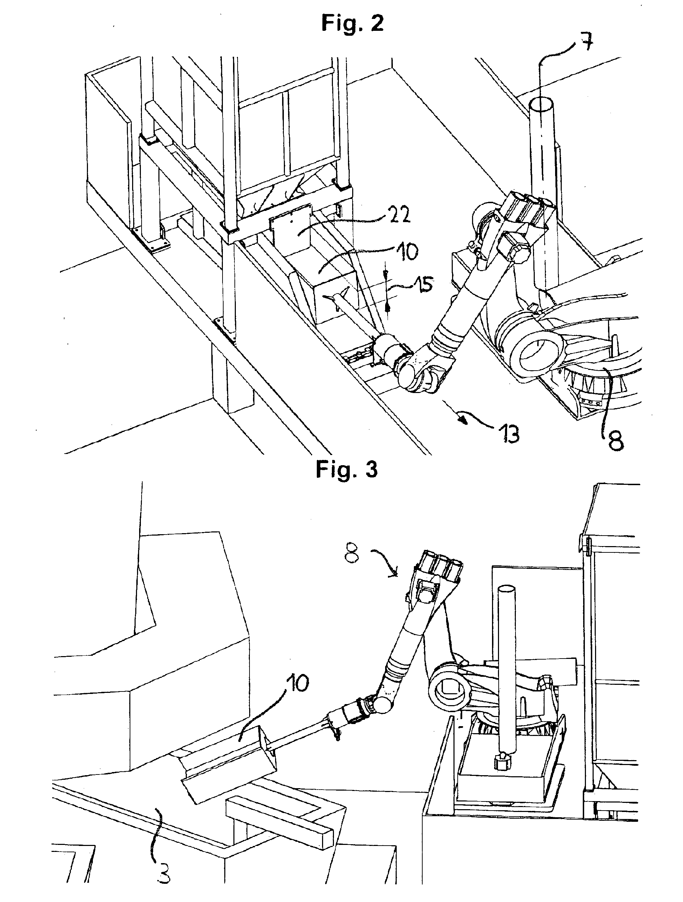

Die Verfahrensschritte beim Dosieren des sich auf der Schaufel 10 befindenden Verteilerpulvers sind in Figur 2 näher dargestellt. Dabei wird die volle oder teilweise befüllte Schaufel 10 relativ gegenüber einer ortsfesten Abstreifkante 11 bewegt, sodass dosiert ein Anteil des Verteilerpulvers von der Schaufel 10 entfernt wird. Konkret führt der Roboter 8 einschließlich der Schaufel 10 eine Abstreifbewegung 13 in horizontale Richtung durch, wobei der Abstand 15 in vertikaler Richtung zwischen der Unterkante der Schaufel 10 und der Unterkante der Abstreifkante 11 positionsgeregelt eingestellt wird. Diese Vorgangsweise hat mehrere Vorteile:
- geringe bis keine Staubentwicklung beim Dosieren;
- das Verteilerpulver wird selbsttätig wieder dem Schüttkegel zugeführt;
- keine störungsanfällige, der Schaufel 10 bzw. dem Verteilerpulver zugeordnete, Wiegeeinrichtung notwendig; sowie
- hohe Dosiergenauigkeit.

### Fig. 3 und 4

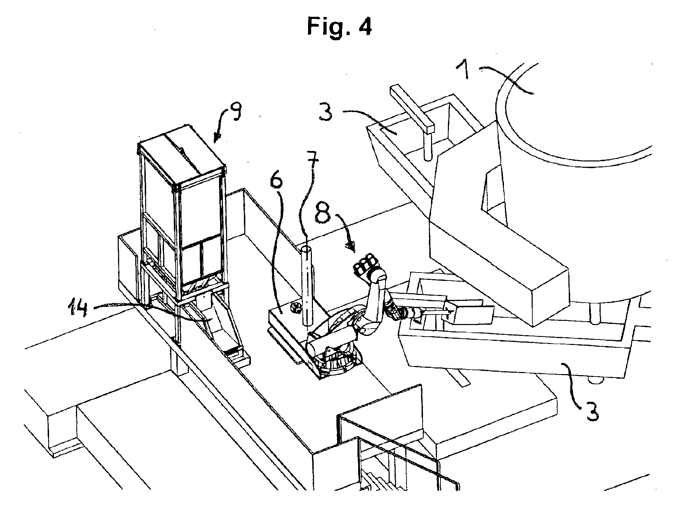

Schließlich zeigen die Fig. 3 und 4, wie eine dosierte Menge an Verteilerpulver mittels des Roboters 8 und der Schaufel 10 in den Verteiler 3 geschüttet wird, sodass der Badspiegel der Stahlschmelze gleichmäßig mit Verteilerpulver bedeckt ist.

### Fig. 5

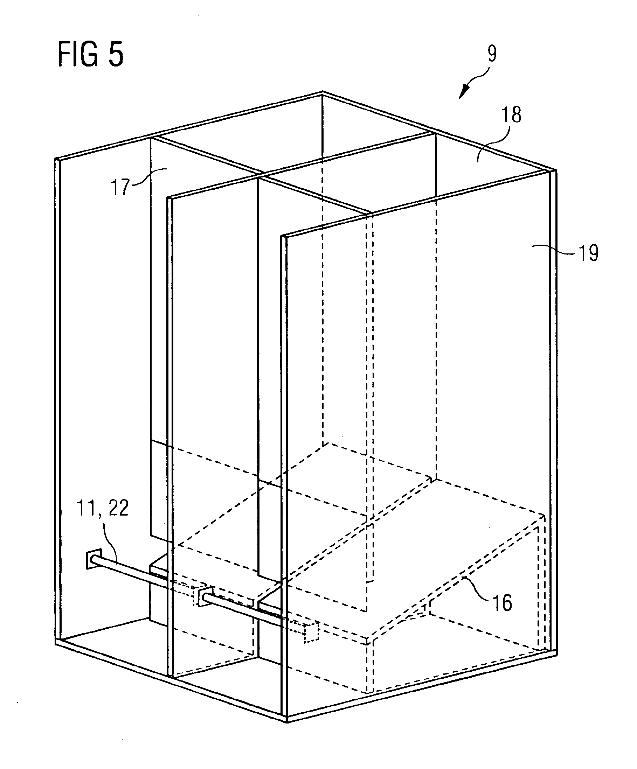

In Fig. 5 ist ein Pulverbunker 9 für zwei pulverförmige Stoffe, z.B. ein Abeckpulver und einen Schlackebildner, dargestellt. Jeder pulverförmige Stoff wird in einem Sack, einem sogenannten *big bag* (siehe z.B. http://www.big-bag.com/bigbags.html) angeliefert und zwischen der Vorderwand 17, der Rückwand 18 sowie den beiden Seitenwänden 19 im oberen Bereich des Pulverbunkers 9 eingehängt, sodass der pulverförmige Stoff selbsttätig über eine schiefe Ebene 16 nach unten rieselt und ein nicht dargestellter Schüttkegel ausgebildet wird. Zweckmäßigerweise umfasst der Pulverbunker 9 eine in vertikaler Richtung oberhalb des Schüttkegels angeordnete Abstreifeinrichtung 22 mit einer Abstreifkante 11, sodass der pulverförmige Stoff beim Dosieren wieder dem Schüttkegel zugeführt wird.

### Fig. 6

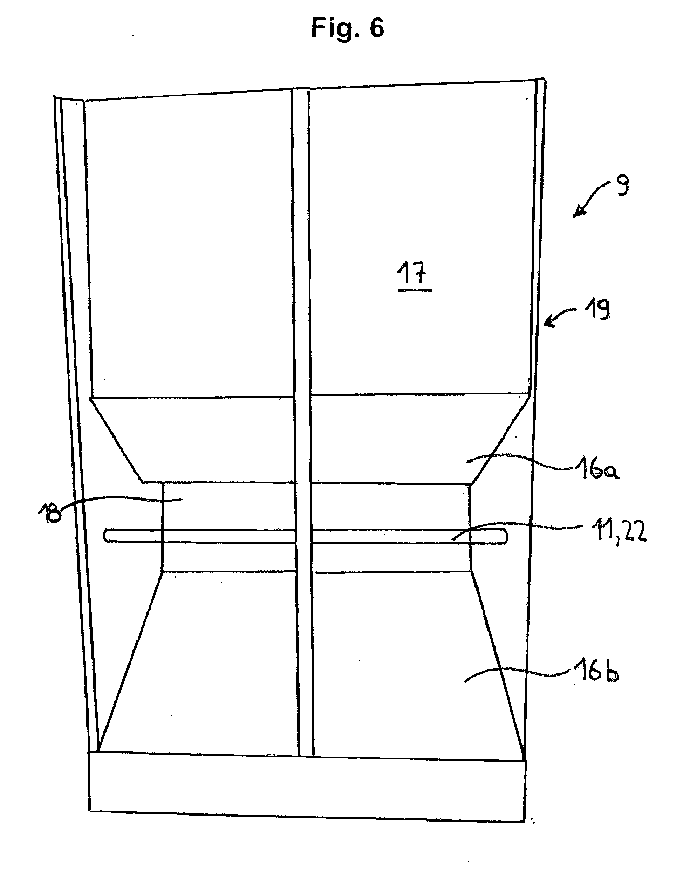

In Fig. 6 ist eine weitere Ausführungsform eines Pulverbunkers 9 für zwei pulverförmige Stoffe gezeigt. Dabei rieselt jeder pulverförmige Stoff selbsttätig über eine obere schiefe Ebene 16a und eine untere schiefe Ebene 16b nach unten, wobei ein nicht dargestellter Schüttkegel ausgebildet wird. Hierbei weist die obere schiefe Ebene 16a einen Abstand zur Rückwand 18 auf, sodass ein Nachrieseln des pulverförmigen Stoffs mit einer vorbestimmten Nachrieselgeschwindigkeit gewährleistet ist.

### Fig. 7

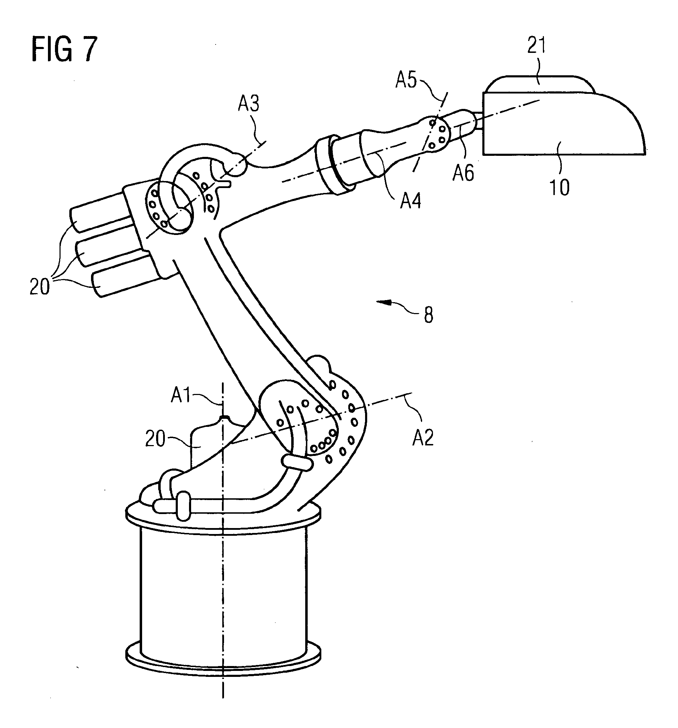

Fig. 7 zeigt eine schematische Darstellung eines als 6-Achsen Industrieroboter ausgebildeten Roboters 8 einschließlich einer mit einem pulverförmigen Stoff 21 teilweise befüllten Schaufel 10. Die Bewegungsachsen des Roboters 8 sind durch strichpunktierte Linien A1 bis A6 dargestellt.

### Fig. 8

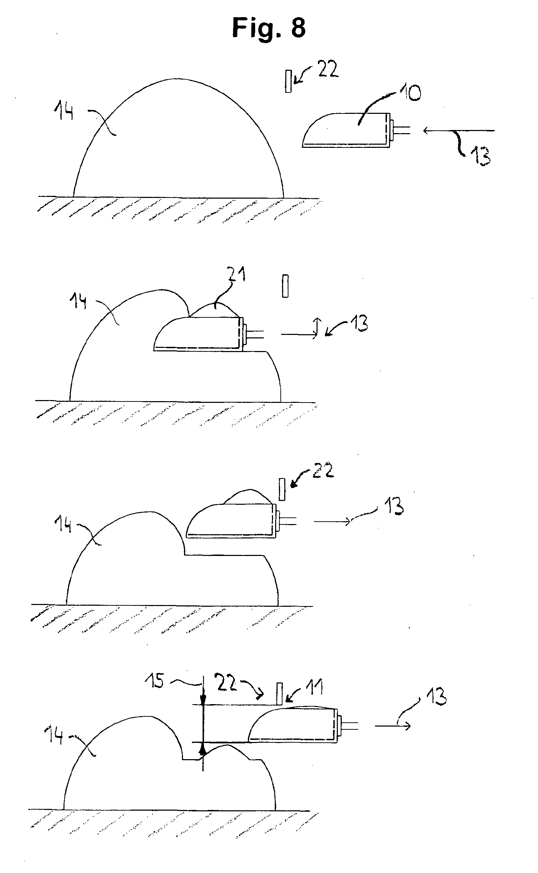

In Fig. 8 sind die Arbeitsschritte beim Einstechen einer Schaufel 10 in einen Schüttkegel 14 eines pulverförmigen Materials, beim Entnehmen der Schaufel 10 aus dem Schüttkegel 14 und beim Dosieren des sich auf der Schaufel 10 befindenden pulverförmigen Materials gezeigt. Aus Gründen der Übersichtlichkeit wurde auf die Darstellung eines mit der Schaufel 10 verbundenen Roboters sowie eines Pulverbunkers verzichtet. Im obersten Teilbild wird eine Schaufel 10, die nach vorne und nach oben hin offen ausgeführt ist, in horizontaler Richtung in einen Schüttkegel 14 eingestochen, sodass die Schaufel 10 teilweise mit dem pulverförmigen Stoff 21 befüllt ist (die Bewegungsrichtung 13 ist durch einen Pfeil symbolisiert). Anschließend wird die teilweise befüllte Schaufel 10 aus dem Schüttkegel 14 entnommen, wobei diese in vertikaler Richtung angehoben und in horizontaler Richtung zurückgezogen wird (siehe Bewegungsrichtung 13). Das dritte Teilbild zeigt die Situation vor dem Dosieren, wobei beim Dosieren die Schaufel 10 in horizontaler Richtung gegenüber einer stillstehenden Abstreifeinrichtung 22 mit einer zugeordneten Abstreifkante 11 verschoben wird, sodass ein Anteil des sich auf der Schaufel 10 befindenden pulverförmigen Stoffs von der Schaufel entfernt wird. Dabei wird der Abstand 15 zwischen der Unterkante der Schaufel und der Abstreifkante 11 positionsgeregelt eingestellt, sodass eine vorbestimmte Menge des pulverförmigen Stoffs entfernt wird.

### Fig. 9

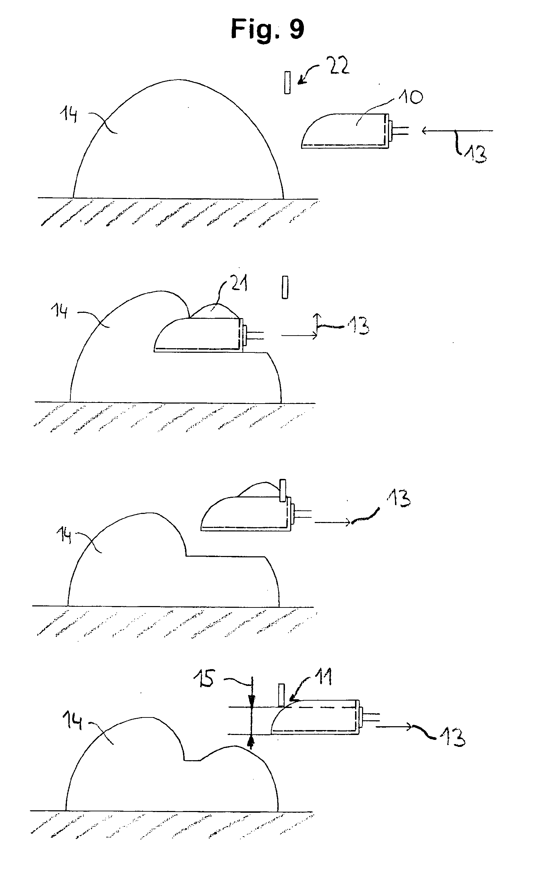

In Fig. 9 wird eine ähnliche Situation als in Fig. 8 gezeigt, wobei jedoch beim Dosieren die Abstreifkante 11 der Abstreifvorrichtung 13 unterhalb der Oberkante der Schaufel positioniert wird, d.h. dass der Abstand zwischen der Abstreifkante 11 und der Unterkante der Schaufel 10 weniger als die Schaufelhöhe beträgt, sodass gegenüber Fig. 8 die mengenmäßige Spreizung beim Dosieren des sich in der Schaufel 10 befindenden pulverförmigen Stoffs erhöht wird.

### Liste der Bezugszeichen

- 1: Pfanne
- 2: Schattenrohr
- 3: Gießverteiler
- 4: Gießrohr
- 5: Gießbühne
- 6: Schwenkkonsole
- 7: Drehachse der Schwenkkonsole
- 8: Roboter
- 9: Pulverbunker
- 10: Schaufel
- 11: Abstreifkante
- 12: Pfannendrehturm
- 13: Bewegungsrichtung
- 14: Schüttkegel
- 15: Abstand
- 16, 16a, 16b: Schiefe Ebene
- 17: Vorderwand
- 18: Rückwand
- 19: Seitenwand
- 20: Antriebsmotor
- 21: pulverförmiger Stoff
- 22: Abstreifeinrichtung

- A1 bis A6: Drehachsen

## Patentansprüche

1. Verfahren zum Aufbringen eines pulverförmigen Stoffs (21) auf einen Badspiegel einer metallischen Schmelze in einem metallurgischen Gefäß (3), aufweisend die folgenden Verfahrensschritte, die von einem Roboter (8) durchgeführt werden:
- Einstechen einer Schaufel (10) in einen Schüttkegel (14) des pulverförmigen Stoffs (21), wobei die Schaufel (10) eine Menge des pulverförmigen Stoffs (21) aufnimmt;
- Dosieren des sich auf der Schaufel (10) befindenden pulverförmigen Stoffs (21), wobei dosiert ein Anteil des pulverförmigen Stoffs (21) von der Schaufel (10) abgestreift wird, indem sich die Schaufel (10) relativ gegenüber einer Abstreifkante (11) bewegt; nachfolgend
- Transportieren der Schaufel (10) sowie des darin enthaltenen pulverförmigen Stoffs (21) zum metallurgischen Gefäß (3); und anschließend
- Entleeren der Schaufel (10) oberhalb des metallurgischen Gefäßes (3), sodass der pulverförmige Stoff (21) auf den Badspiegel der Schmelze aufgebracht wird.

2. Verfahren nach Anspruch 1, **dadurch gekennzeichnet, dass** das Dosieren geregelt erfolgt, wobei die Regelung als Sollgröße eine Position, vorzugsweise einen Abstand (15) in vertikaler Richtung zwischen der Schaufel (10) und der Abstreifkante (11) verwendet.

3. Verfahren nach Anspruch 1, **dadurch gekennzeichnet, dass** das Dosieren geregelt erfolgt, wobei die Regelung als Sollgröße ein Gewicht, vorzugsweise das Gewicht der zumindest teilweise befüllten Schaufel (10), verwendet.

4. Verfahren nach einem der Ansprüche 1 bis 3, **dadurch gekennzeichnet, dass** die Schaufel (10) eine Relativbewegung in horizontaler Richtung (13) gegenüber einer stillstehenden Abstreifkante (11) ausführt.

5. Verfahren nach einem der Ansprüche 1 bis 4, **dadurch gekennzeichnet, dass** nach dem Einstechen die zumindest teilweise befüllte Schaufel (10) aus dem Schüttkegel (14) entnommen wird.

6. Verfahren nach einem der Ansprüche 1 bis 5, **dadurch gekennzeichnet, dass** das Transportieren eine Schwenkbewegung vom Schüttkegel (14) zum metallurgischen Gefäß (3) umfasst.

7. Verfahren nach einem der Ansprüche 1 bis 6, **dadurch gekennzeichnet, dass** vor dem Entleeren die Bedeckung des Badspiegels mit dem pulverförmigen Stoff (21) ermittelt wird und die Schaufel (10) vorzugsweise oberhalb von unbedeckten oder wenig bedeckten Positionen entleert wird.

8. System zum Aufbringen eines pulverförmigen Stoffs (21) auf einen Badspiegel einer metallischen Schmelze in einem metallurgischen Gefäß (3), aufweisend
- zumindest einen Bunker (9) zur Lagerung des pulverförmigen Stoffs (21), wobei der Bunker (9) in vertikaler Richtung erhöht gegenüber einer Gießbühne (21) angeordnet ist, sodass der pulverförmige Stoff (21) den Bunker (9) in Form eines Schüttkegels (14) verlassen kann;
- einen mit einer Schaufel (10) verbunden Roboter (8) zum Einstechen, Dosieren, Transportieren und Entleeren des pulverförmige Stoffs (21), wobei die Schaufel (10) zumindest teilweise nach vorne und zumindest teilweise nach oben offen ausgeführt ist; und
- eine Abstreifkante (11), wobei mittels einer Relativbewegung zwischen der Schaufel (10) und der Abstreifkante (11) ein Anteil des pulverförmigen Stoffs (21) von der Schaufel (10) abstreifbar ist, wobei die Abstreifkante (11) oberhalb des Schüttkegels (14) angeordnet und horizontal ausgerichtet ist, sodass der bei der Dosierung entfernte pulverförmige Stoff (21) selbsttätig wieder dem Schüttkegel (14) zuführbar ist.

9. System nach Anspruch 8 mit einem metallurgische Gefäß (3) und einem Schüttkegel (14), **dadurch gekennzeichnet, dass** sich der Schüttkegel (14) und das metallurgische Gefäß (3) innerhalb des minimalen und maximalen Arbeitsbereichs des Roboters (8) befinden.

10. System nach einem der Ansprüche 8 bis 9, **dadurch gekennzeichnet, dass** wenigstens eine Roboterachse (A1 bis A6) eine Messeinrichtung zur Bestimmung der Ist-Position der Schaufel (10), oder eine Messeinrichtung zur Bestimmung des Gewichts der zumindest teilweise befüllten Schaufel (10), aufweist und diese Roboterachse (A1 bis A6) mit einer Regelungseinrichtung verbunden ist.

11. Verwendung des Systems nach einem der Ansprüche 8 bis 10 in einer Stranggießanlage zur Herstellung von Gießprodukten aus Stahl.

## Claims

1. Process for applying a pulverulent material (21) to a surface of a metallic melt in a metallurgical vessel (3), said process having the following process steps, which are carried out by a robot (8):
- pushing a shovel (10) into a cone (14) of the pulverulent material (21), wherein the shovel (10) takes up a quantity of the pulverulent material (21);
- metering the pulverulent material (21) located on the shovel (10) wherein a proportion of the pulverulent material (21) is stripped from the shovel (10) in a metered manner by moving the shovel (10) relative to a stripping edge (11); then
- transporting the shovel (10) and the pulverulent material (21) present therein to the metallurgical vessel (3); and then
- emptying the shovel (10) above the metallurgical vessel (3) so that the pulverulent material (21) is applied to the surface of the melt.

2. Process according to Claim 1, **characterized in that** the metering process is carried out in a regulated manner, wherein the regulation uses a position, preferably a distance (15) in the vertical direction between the shovel (10) and the stripping edge (11), as a target parameter.

3. Process according to Claim 1, **characterized in that** the metering process is carried out in a regulated manner, wherein the regulation uses a weight, preferably the weight of the at least partly filled shovel (10), as a target parameter.

4. Process according to one of Claims 1 to 3, **characterized in that** the shovel (10) carries out a relative movement in the horizontal direction (13) with respect to a stationary stripping edge (11).

5. Process according to one of Claims 1 to 4, **characterized in that** the at least partly filled shovel (10) is removed from the material cone (14) after having been pushed in.

6. Process according to one of Claims 1 to 5, **characterized in that** the transportation comprises a pivotal movement from the material cone (14) to the metallurgical vessel (3).

7. Process according to one of Claims 1 to 6, **characterized in that** the covering of the surface with the pulverulent material (21) is established before the emptying process and the shovel (10) is preferably emptied above uncovered or poorly covered positions.

8. System for applying a pulverulent material (21) to a surface of a metallic melt in a metallurgical vessel (3), said system having:
- at least one bunker (9) for storing the pulverulent material (21), wherein the bunker (9) is raised in the vertical direction with respect to a pouring platform (21) so that the pulverulent material (21) can leave the bunker (9) in the form of a material cone (14);
- a robot (8) connected to a shovel (10) to push the shovel in and meter, transport and empty the pulverulent material (21), wherein the shovel (10) is open at least partly to the front and at least partly upwardly; and
- a stripping edge (11), wherein a proportion of the pulverulent material (21) can be stripped from the shovel (10) by means of a relative movement between the shovel (10) and the stripping edge (11), wherein the stripping edge (11) is arranged above the material cone (14) and is aligned horizontally so that the pulverulent material (21) removed during the metering process can be automatically fed back to the material cone (14).

9. System according to Claim 8 with a metallurgical vessel (3) and a material cone (14), **characterized in that** the material cone (14) and the metallurgical vessel (3) are located within the minimal and maximal working range of the robot (8).

10. System according to one of Claims 8 and 9, **characterized in that** at least one robot axis (A1 to A6) has a measuring device for determining the actual position of the shovel (10), or a measuring device for determining the weight of the at least partly filled shovel (10), and this robot axis (A1 to A6) is connected to a regulation device.

11. Use of the system according to one of Claims 8 to 10 in a continuous casting plant for producing cast steel products.

## Revendications

1. Procédé d'application d'une matière pulvérulente (21) sur une surface de bain d'un métal fondu dans une cuve métallurgique (3), présentant les étapes de procédé suivantes qui sont effectuées par un robot (8) :
- enfoncement d'une pelle (10) dans un cône de déversement (14) de la matière pulvérulente (21), où la pelle (10) prend une quantité de la matière pulvérulente (21);
- dosage de la matière pulvérulente (21) se trouvant sur la pelle (10) où, de façon dosée, une partie de la matière pulvérulente (21) est enlevée de la pelle (10), par raclage, tandis que la pelle (10) se déplace par rapport à une arête de raclage (11); ensuite
- transport de la pelle (10) ainsi que de la matière pulvérulente (21) contenue dans celle-ci, jusqu'à la cuve métallurgique (3); et après
- vidage de la pelle (10) au-dessus de la cuve métallurgique (3), de sorte que la matière pulvérulente (21) est appliquée sur la surface de bain du métal fondu.

2. Procédé selon la revendication 1, **caractérisé en ce que** le dosage se produit de façon réglée, où le réglage utilise, comme grandeur théorique, une position, de préférence une distance (15) comprise, dans le sens vertical, entre la pelle (10) et l'arête de raclage (11).

3. Procédé selon la revendication 1, **caractérisé en ce que** le dosage se produit de façon réglée, où le réglage utilise, comme grandeur théorique, un poids, de préférence le poids de la pelle (10) au moins partiellement remplie.

4. Procédé selon l'une quelconque des revendications 1 à 3, **caractérisé en ce que** la pelle (10) effectue, dans le sens horizontal (13), un mouvement relatif par rapport à une arête de raclage (11) fixe.

5. Procédé selon l'une quelconque des revendications 1 à 4, **caractérisé en ce que**, après l'enfoncement, la pelle (10) au moins partiellement remplie est retirée du cône de déversement (14).

6. Procédé selon l'une quelconque des revendications 1 à 5, **caractérisé en ce que** le transport comprend un mouvement pivotant depuis le cône de déversement (14) jusqu'à la cuve métallurgique (3).

7. Procédé selon l'une quelconque des revendications 1 à 6, **caractérisé en ce que**, avant le vidage, on détermine le recouvrement de la surface de bain avec la matière pulvérulente (21), et la pelle (10) est vidée de préférence au-dessus de positions non recouvertes ou peu recouvertes.

8. Système d'application d'une matière pulvérulente (21) sur une surface de bain d'un métal fondu dans une cuve métallurgique (3), présentant
- au moins une trémie (9) servant au stockage de la matière pulvérulente (21), où la trémie (9) est disposée en étant surélevée dans le sens vertical, par rapport à une plateforme de coulée (21), de sorte que la matière pulvérulente (21) peut quitter la trémie (9) sous forme d'un cône de déversement (14);
- un robot (8) relié à une pelle (10) et servant à l'enfoncement, au dosage, au transport et au vidage de la matière pulvérulente (21), où la pelle (10) est réalisée en étant ouverte au moins partiellement vers l'avant et au moins partiellement vers le haut; et
- une arête de raclage (11) où, par un mouvement relatif entre la pelle (10) et l'arête de raclage (11), une partie de la matière pulvérulente (21) peut être enlevée de la pelle (10), par raclage, où l'arête de raclage (11) est disposée au-dessus du cône de déversement (14) et orientée horizontalement, de sorte que la matière pulvérulente (21) enlevée au cours du dosage peut être fournie à nouveau automatiquement au cône de déversement (14).

9. Système selon la revendication 8 comprenant une cuve métallurgique (3) et un cône de déversement (14), **caractérisé en ce que** le cône de déversement (14) et la cuve métallurgique (3) se trouvent à l'intérieur de la zone de travail minimale et maximale du robot (8).

10. Système selon l'une des revendications 8 et 9, **caractérisé en ce qu'**au moins un axe de robot (A1 à A6) présente un dispositif de mesure servant à déterminer la position réelle de la pelle (10) ou un dispositif de mesure servant à déterminer le poids de la pelle (10) au moins partiellement remplie, et cet axe de robot (A1 à A6) est relié à un dispositif de réglage.

11. Utilisation du système selon l'une quelconque des revendications 8 à 10 dans une installation de coulée continue, pour la fabrication de produits de fonderie en acier.
